# EUROPÄISCHE PATENTSCHRIFT

(11) **EP 1 712 411 B1**
(45) Veröffentlichungstag und Bekanntmachung des Hinweises auf die Patenterteilung: **19.12.2007**
(21) Anmeldenummer: 06112625.6
(22) Anmeldetag: 13.04.2006
(51) Int. Cl.: B60N 2/66, A47C 7/46

(54) **Fahrzeugsitz mit verformbarer S-förmiger Rückenlehne**
Vehicle seat with a deformable, S-shaped backrest
Siège de véhicule à dossier deformable en forme de S

(30) Priorität: 15.04.2005 DE 102005017634
(43) Veröffentlichungstag der Anmeldung: 18.10.2006
(73) Patentinhaber: GRAMMER AG, 92224 Amberg (DE)
(72) Erfinder: Kohl, Josef, 92242 Hirschau (DE); Erker, Christian, 92256 Hahnbach (DE)
(74) Vertreter: Hannke, Christian

(56) Entgegenhaltungen:
- EP-A2- 1 352 595
- DE-A1- 19 714 576

## Beschreibung

Die Erfindung betrifft einen Fahrzeugsitz mit Rückenlehne und Sitzteil, wobei die Rückenlehne einen Rückenlehnenrahmen und dazwischen angeordnete S-förmige Stangenelemente zur Bildung einer S-förmigen Rückenlehne mit einem in Vorwärts- und Rückwärtsrichtung verformbaren Schulterbereich und einem in Vorwärts- und Rückwärtsrichtung verformbaren Lendenwirbelbereich umfasst, wobei die sich in Rückenlehnenlängsrichtung erstreckenden Stangenelemente mit ihren unteren und oberen Enden am Rückenlehnenrahmen schwenkbar derart gelagert sind, dass sie um eine sich in Längsrichtung der Rückenlehne erstreckende imaginäre Achse schwenkbar sind, gemäß dem Oberbegriff des Patentanspruches 1.

Fahrzeugsitze mit verformbaren Rückenlehnen sind herkömmlicherweise mit einer verstellbaren Lendenstütze im Bereich der Lendenwirbel einer den Fahrzeugsitz benutzenden Person ausgestattet. Derartige Lendenstützen können sowohl in Vorwärts- als auch in Rückwärtsrichtung verstellt werden, um durch eine konvexartige Verformung der Rückenlehne im Lendenwirbelbereich eine mehr oder weniger starke Stütze für die Person in Abhängigkeit davon, ob diese ein mehr oder weniger starkes Hohlkreuz aufweist, zur Erhöhung des Sitzkomforts zur Verfügung zu stellen.

Derartige Lendenwirbelstützen werden von der Person in ihrer Verformung voreingestellt und verbleiben in dieser Form, bis die Person beispielsweise durch Betätigung eines Handrades diese neu einstellt. Dies erfordert die Zuhilfenahme mindestens einer Hand, welcher während des Fahrzustandes des Fahrzeuges häufig nicht zur Verfügung steht. Zudem weisen derartige Fahrzeugsitze eine den Lendenwirbelbereich und den Schulterbereich der sie benutzenden Person angepasste S-Form auf, die auf eine Durchschnittsgröße der Person ausgerichtet ist. Eine derartige S-förmige Rückenlehne umfasst den in Fahrtrichtung gesehen konkav ausgebildeten Schulterbereich und den konvex ausgebildeten Lendenwirbelbereich, die an die Wirbelsäulenform eines durchschnittlich großen Menschen angepasst sind. Dies hat zur Folge, dass überdurchschnittlich große und kleine Menschen einen geringen Sitzkomfort in derartigen Fahrzeugsitzen genießen.

Weiterhin sind Sitze bekannt, deren Rückenlehne in ihrer S-Form verstellt werden kann. Dies erfordert eine Anpassung der Rückenneigung, an das Blickfeld der Person beizubehalten.

Hierdurch stellt sich eine ungewollte Veränderung des Winkels zwischen Ober- und Unterkörper der Person ein.

Aus EP 1 082 233 B1 ist ein elastisches Wölbelement für Rückenlehnen bekannt, welches als Lordosenstütze wirkt. Das Wölbelement besteht aus einem im Wesentlichen flächigen, wölbbaren Elementteil und aus mindestens einer damit geringflächig fest verbundenen Platte mit zwei freien federnden Enden, wobei die Platte als Stütze gegenüber einem darauf angeordnetes Rückenlehnenpolster bei gewölbten Elementteil dient. Das Wölbteil wird unabhängig von der Momentanstellung eines Sitzteils des Fahrzeugsitzes betätigt und erfordert die separate Betätigung von hierfür vorgesehenen Betätigungselementen.

Aus EP 0 957 716 B1 ist ein Fahrzeugsitz mit einer Rückenlehne und einem Sitzteil bekannt, bei dem im Rückenlehnenbereich ein Lendenstützmechanismus eingebaut ist, welcher sich aus einem biegsamen Stützorgan zusammensetzt, dass an seinem oberen und unteren Ende eingespannt ist und derart zusammengezogen werden kann, dass es eine Wölbung, zum Beispiel im Lendenbereich bildet. Hierdurch wird eine Lendenstütze erhalten, die in Vorwärtsrichtung verstellt werden kann, um durch eine konvexartige Verformung der Rückenlehne im Lendenwirbelbereich eine mehr oder weniger starke Stütze für die Person in Abhängigkeit davon, ob diese ein mehr oder weniger starkes Hohlkreuz aufweist, zur Erhöhung des Sitzkomforts zur Verfügung zu stellen.

Aus DE-A-197 14 576 ist ein Sitz mit den Merkmalen des Oberbegriffs des Anspruchs 1 bekannt.

Die oben dargestellten bekannten Rückenlehnen sind - abgesehen davon, dass sie eine Verformung der Rückenlehne lediglich im Lendenwirbelbereich vorsehen - derart konzipiert, dass sie in festgelegten Bereichen der Rückenlehne eine Verformung erfahren, also keine Abstimmung der Rückenlehnenverformung auf die Größe der den Fahrzeugsitz benutzenden Person, insbesondere ihrer Rückenlehne, erlauben. Dies hat zur Folge, dass extrem große oder extrem kleine Personen einen verminderten Sitzkomfort erfahren.

Demzufolge liegt der vorliegenden Erfindung die Aufgabe zugrunde, einen Fahrzeugsitz mit Sitzteil und S-förmiger Rückenlehne zur Verfügung zu stellen, der eine Verformung der Rückenlehne mit erhöhtem Sitzkomfort für Personen, mit unterschiedlichen Größen ermöglicht.

Diese Aufgabe wird gemäß den Merkmalen des Patentanspruches 1 gelöst.

Ein wesentlicher Punkt der Erfindung liegt darin, dass bei einem Fahrzeugsitz mit Rückenlehne und Sitzteil, bei dem die Rückenlehne einen Rückenlehnenrahmen und dazwischen angeordnete S-förmige Stangenelemente zur Bildung einer S-förmigen Rückenlehne mit einem in Vorwärts- oder Rückwärtsrichtung verformbaren Schulterbereich und einem in Vorwärts- oder Rückwärtsrichtung verformbaren Lendenwirbelbereich umfasst, die Stangenelemente in Längsrichtung der Rückenlehne verschiebbar am Rückenlehnenrahmen gelagert sind. Die sich in Rückenlehnenlängsrichtung erstreckenden Stangenelemente sind mit ihren unteren und oberen Enden am Rückenlehnenrahmen derart schwenkbar gelagert, dass sie um eine sich in Längsrichtung der Rückenlehne erstreckende imaginäre Achse schwenkbar sind. Auf diese Weise können die S-förmigen Stangen dazu dienen, sowohl den Lendenwirbelbereich als auch den Schulterbereich mehr oder weniger konvex beziehungsweise konkav auszubilden und zusätzlich diese konvex- beziehungsweise konkav ausgebildeten Bereiche der Rückenlehne in ihrer Höhe zu verschieben, sodass selbst außerhalb der Durchschnittsgröße liegende sehr kleine und sehr große Personen diese konvex- beziehungsweise konkav ausgebildeten Bereiche an den Schulter- und Lendenwirbelregionen ihres Rückens anordnen können. Dies führt zu einem erhöhten Sitzkomfort.

Zudem ist durch die schwenkbare Lagerung der S-förmigen Stangenelemente eine selbsttätige Verformung des Lendenwirbelbereichs beziehungsweise Schulterbereichs in Vorwärtsrichtung ohne Veränderung einer gegenüber dem Sitzteil bestehenden Neigungsstellung der Rückenlehne möglich, in dem die Person durch Druckausübung mittels seiner Schultern beispielsweise eine nach innen gerichtete stärkere Wölbung des Schulterbereichs der Rückenlehne und gleichzeitig eine nach außen beziehungsweise in Fahrtrichtung vorwärts gerichtete stärkere Wölbung des Lendenwirbelbereichs der Rückenlehne erfährt. Eine entgegengesetzte Bewegung beziehungsweise Verformung der S-förmigen Rückenlehne lässt sich durch eine nach hinten gerichtete Druckausübung der Lendenwirbel der Person im Lendenwirbelbereich der Rückenlehne erreichen, wodurch der Lendenwirbelbereich eine noch geringer nach vorne gerichtete Wölbung einnimmt, während sich gleichzeitig im Schulterbereich der Rückenlehne eine geringere nach hinten gerichtete Wölbung ausbildet. Auf diese Weise kann durch eine Gewichtsverlagerung im Oberkörperbereich der Person eine geänderte Rückenlehnenkonturkrümmung erhalten werden, die zu einer neuen gestützten Wirbelsäulenkrümmung der Person führt.

Da eine derartige Änderung der Rückenlehnenkontur auf einfache Weise durch eine Gewichtsverlagerung im Oberkörperbereich beziehungsweise durch Kraftausübung des Personenrückens mittels einer Veränderung der Rückenform erhalten werden kann, kann diese entsprechend häufig auch während des Fahrzustandes des Fahrzeuges durchgeführt werden, wodurch aufgrund der häufigen Bewegung Bandscheibenschäden vermieden werden können und dauerhaft belastete Muskelpartien entlastet werden. Durch eine kontinuierlich durchgeführte Veränderung der dadurch erhaltenen Wirbelsäulenkrümmung ist sogar ein Massageeffekt erhältlich.

Vorzugsweise sind die Stangenelemente zweiteilig derart aufgebaut, dass jeweils ein erstes oberes Stangenelementteil unabhängig von einem zweiten unteren Stangenelementteil verschwenkbar ist. Hierdurch wird erreicht, dass eine noch bessere Rückenformanpassung insbesondere für kleine und sehr große Personen möglich ist, da durch das getrennte Drehen der oberen und unteren Stangenelementteile ein in Rückenlehnenlängsrichtung gesehenes Zusammen- beziehungsweise Auseinanderführen der konvex- beziehungsweise konkav ausgebildeten Lendenwirbel- beziehungsweise Schulterbereiche möglich ist.

Die Stangenelemente werden vorzugsweise gleichzeitig höhenverstellt. Jedoch weisen Personen häufig eine links- oder rechtsseitige nicht vollständig gerade Wirbelsäule auf, sodass das getrennte Verschieben beziehungsweise Höhenverstellen von zwei S-förmigen Stangenelementen, wovon eine links- und eine rechtsseitig der Wirbelsäule angeordnet ist, sogar in diesem Fall eine individuelle Anpassung der Rückenlehne an den Rücken mit gekrümmter Wirbelsäule ermöglicht.

Gemäß einer bevorzugten Ausführungsform ist jedes Stangenelement an seinem unteren und oberen Ende mittels erster und zweiter Verbindungselemente, welche am Rückenlehnenrahmen mittels Schwenklager schwenkbar gelagert sind, mit dem Rückenlehnenrahmen verbunden. Hierfür kann das untere und obere Ende von jedem Stangenelement in einem Endbereich des Verbindungselements mittels Verbindungsstellen befestigt sein.

Das erste Schwenklager des ersten Verbindungselementes, welches dem oberen Ende jedes Stangenelementes zugeordnet ist, umfasst ein am Rückenlehnenrahmen befestigtes erstes Stangenstück, welches in seiner Längsrichtung gegenüber dem Rückenlehnenrahmen verschiebbar ist und das erste Verbindungselement in einer Bohrung durchläuft.

Das zweite Schwenklager des zweiten Verbindungselements, welches dem unteren Ende jedes Stangenelements zugeordnet ist, umfasst ein am Rückenlehnenrahmen befestigtes zweites Stangenstück, welches in seiner Längsrichtung gegenüber dem Rückenlehnenrahmen verschiebbar ist und mit dem zweiten Verbindungselement endseitig verbunden ist. Somit steht ein einfach konstruiertes Schwenklager für die oberen und unteren Enden der Stangenelemente zur Verfügung, welches nicht nur das Drehen der Stangenelemente um die sich in Längsrichtung der Rückenlehne erstreckende Achse zur Bildung der mehr oder weniger konvex beziehungsweise konkav ausgebildeten Lendenwirbel- und Schulterbereiche, sondern auch eine Höhenverschiebung dieser Stangen auf einfache Weise ermöglicht.

Das zweite Stangenstück weist unterseitig ein Anschlagelement zur Begrenzung einer Schiebebewegung des zweiten Stangenstücks auf.

Ein an einem oder mehreren der Stangen angebrachtes Betätigungselement dient zur Durchführung einer Schiebebewegung mindestens einer der Stangenstücke, die dazu führt, dass eine Höhenverstellung der S-förmigen Stangen und damit eine Anpassung an die verschieden langen Rücken der Benutzerpersonen ermöglicht.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer perspektivischen, schematischen Darstellung die Grundkonstruktion eines Fahrzeugsitzes gemäß einer Ausführungsform der Erfindung ohne Rückenlehnen- und Sitzpolster und mit einer Rückenlehnenpolsterauflage im Lordosenbereich;
- Fig. 2: in einer schematischen Vorderansicht den in Fig. 1 gezeigten Fahrzeugsitz gemäß der erfindungsgemäßen Ausführungsform, und
- Fig. 3: in einer schematischen Seitenansicht den in Fig. 1 und Fig. 2 gezeigten Fahrzeugsitz gemäß der erfindungsgemäßen Ausführungsform.

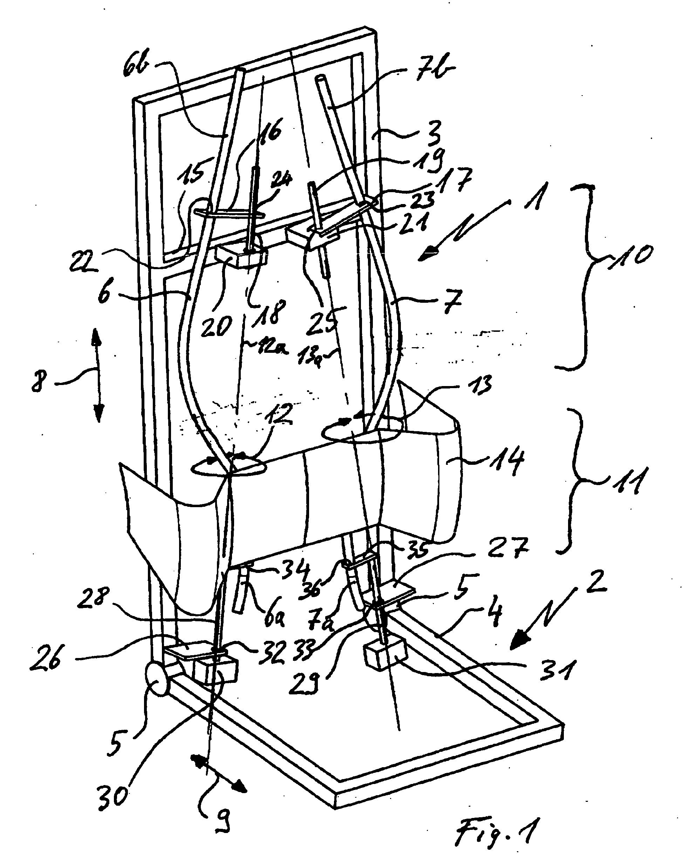

In Fig. 1 wird die Grundkonstruktion eines erfindungsgemäßen Fahrzeugsitzes in einer perspektivischen schematischen Darstellung wiedergegeben. Der Fahrzeugsitz umfasst eine Rückenlehne 1 und ein Sitzteil 2 mit einem Rückenlehnenrahmen 3 und einem Sitzteilrahmen 4.

Der Rückenlehnenrahmen 3 ist gegenüber dem Sitzteil 4 mittels einem Schwenklager 5 schwenkbar, also neigbar.

Zwei S-förmige Stangen 6, 7 sind an ihren unteren Enden 6a, und 7a und an ihren oberen Enden 6b, 7b derart mit dem Rückenlehnenrahmen 3 verbunden, dass sie um eine sich in Längsrichtung 8 des Rückenlehnenrahmens 3 erstreckende imaginäre Achse 12a, 13a gedreht und zugleich in Längsrichtung 8 verschoben werden können. Die Drehung wird durch die Bezugszeichen 12 und 13 dargestellt. Diese Drehung kann verriegelt werden, um eine starke Abstützung bei unterschiedlichen Rückenformen zu erreichen. Bei unverriegelten Stangenelementen ist eine dynamische Bewegung der Rückenlehne möglich.

Die S-förmigen Stangen 6, 7 können mittels einer Drehbewegung in einem Schulterbereich 10 und einem Lendenwirbelbereich 11 mehr oder weniger in Vorwärts- beziehungsweise Rückwärtsrichtung 9 gedreht werden, sodass konvex- beziehungsweise konkavausgebildete Schulter- beziehungsweise Lendenwirbelbereiche entstehen.

Mit dem Bezugszeichen 14 wird ein Teil einer Auflage dargestellt, die dazu dient, die Schiebe- und Drehbewegung der Stangen 6, 7 auf ein hier nicht gezeigtes Rückenlehnenpolster zu übertragen.

Der Rückenlehnenrahmen 3 weist in seinem oberen Bereich eine Querstrebe 15 auf, an welcher Schwenklager, die zugleich ein Verschieben der Stangenelemente 6, 7 in Höhenrichtung ermöglichen, angeordnet sind. Die Stangenelemente 6, 7 sind an ihren oberen Enden 6b, 7b mittels erster plattenähnlicher Verbindungselemente 16, 17 mit ersten Stangenstücken 18, 19 verbunden, die wiederum über Basisteile 20, 21 an der Querstrebe 15 angeordnet sind.

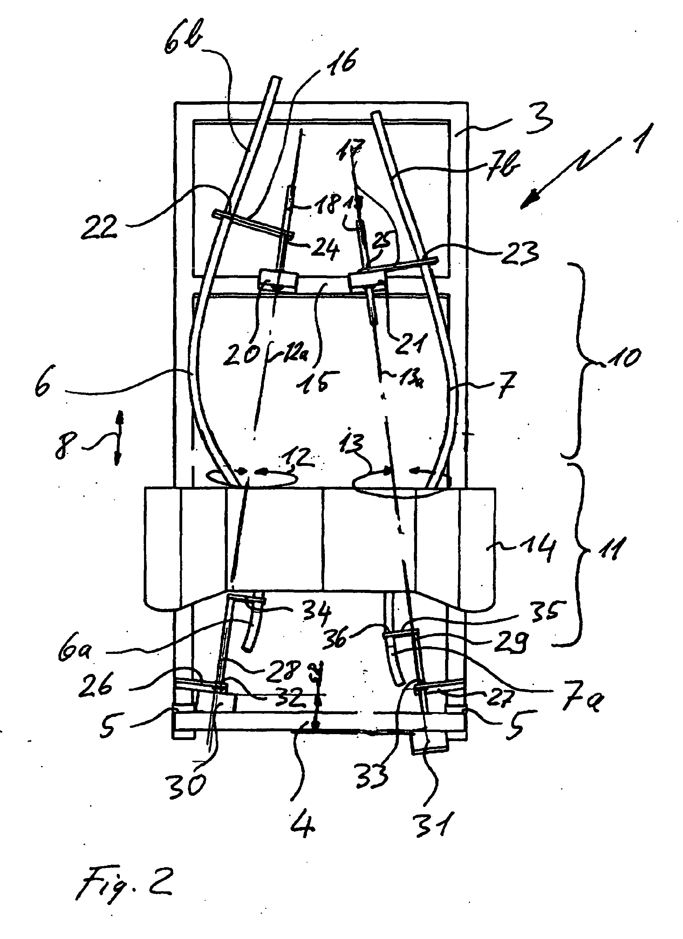

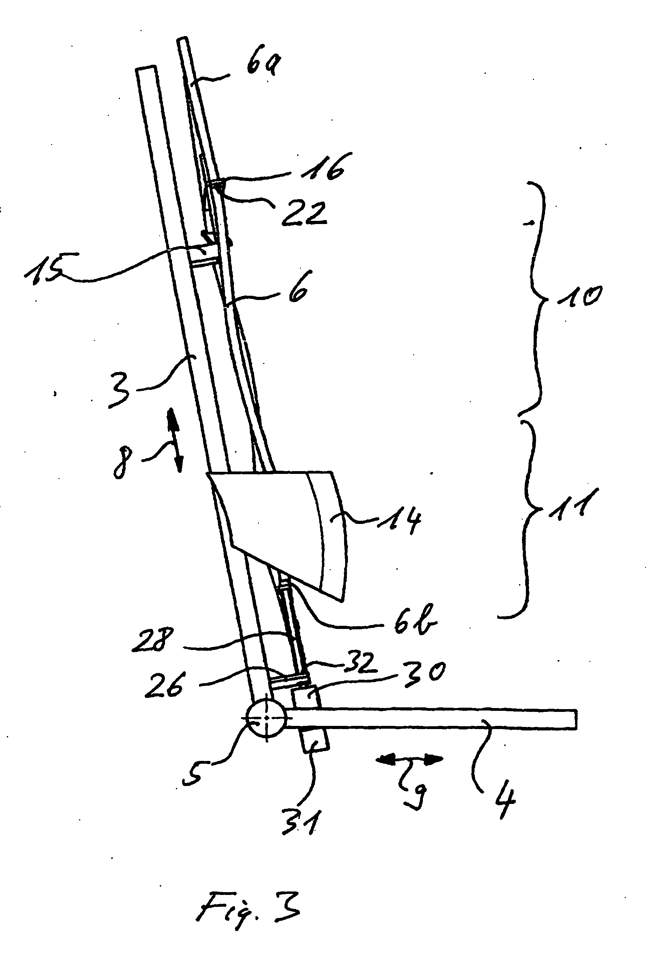

Wie auch aus einer Zusammenschau mit Fig. 2 und Fig. 3 ersichtlich ist, durchlaufen die Stangenelemente 6, 7 die ersten Verbindungselemente 16, 17 mittels einer darin angeordneten Bohrung 22, 23 und können wahlweise in diesem Bereich mit den ersten Verbindungselementen 16, 17 verschweißt sein. Alternativ kann jede Art von Verbindungsstelle anstelle der Bohrungen 22, 23 im Endbereich der Verbindungselemente verwendet werden.

Bohrungen 24, 25 dienen dazu, die ersten Verbindungselemente 16, 17 mit den Stangenstücken 18, 19 zu verbinden.

Den Figuren 1, 2 und 3 ist deutlich zu entnehmen, dass die ersten Stangenstücke 18, 19 ebenso wie die zweiten Stangenstücke 28, 29 an den unteren Enden 6a, 7a der Stangen 6, 7 in den ersten Basiselementen 20, 21 beziehungsweise den zweiten Basiselementen 26, 27 verschiebbar derart gelagert sind, dass durch eine Schiebebewegung der Stangenstücke 18, 19; 28, 29 ein gleichzeitige Verschiebung der Stangen 6, 7 in Längsrichtung 8 des Rückenlehnenrahmens 3 durchgeführt wird.

Um eine derartige Schiebebewegung, die beispielsweise über eine Distanz von 58mm oder mehr durchgeführt werden kann, wie es aus Fig. 2 ersichtlich ist, zu begrenzen, weisen die zweiten Stangenstücken 28, 29 unterseitig Anschlagelemente 30, 31 auf, die bei maximaler Nachobenverschiebung der Stangen 6, 7 die zweiten Basiselemente 26, 27 unterseitig kontaktieren. Die Anschlußelemente (30, 31) können gleichzeitig als hier nicht dargestellte Betätigungselemente zur Höhenverstellung der Stangenelemente (6, 7) dienen.

Den Figuren 1, 2 und 3 ist zu entnehmen, dass eines der Stangenelemente im verschoben und das andere Stangenelement im unverschobenen Zustand dargestellt ist. Üblicherweise werden die Stangenelemente gemeinsam verschoben. Allerdings ist auch eine getrennte Verschiebung beider Stangenelemente 6, 7 möglich, sodass eine komfortablere Anpassung der Rückenlehne an die jeweilige Rückenform der den Fahrzeugsitz benutzenden Person erreicht wird.

Die zweiten Stangenstücken 28, 29 durchlaufen die zweiten Basiselemente 26, 27 für die Durchführung der Schiebebewegung in den Bohrungen 32, 33, in welchen ein Drehlager bekannter Art angeordnet sein kann.

Zweite Verbindungselemente 34, 35 sind mittels Verbindungsstellen, wie Bohrungen 36, in deren Bereich die Verbindungselemente 34, 35 mittels Stangenelementen 6, 7 verschweißt sein können, mit den Stangenelementen verbunden. Die zweiten Verbindungselemente 34, 35 sind hebelartig ausgestaltet und können unterschiedliche Hebellängen zur Anpassung an eine bestehende Rückenlordoseempfindlichkeit aufweisen.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Rückenlehne
- 2: Sitzteil
- 3: Rückenlehnenrahmen
- 4: Sitzteilrahmen
- 5: Schwenklager
- 6, 7: S-förmige Stangenelemente
- 6a, 7a: untere Enden der stangenförmigen Stangenelemente
- 6b, 7b: obere Enden der Stangenelemente
- 8: Längsrichtung der Rückenlehne
- 9: Vorwärts- und Rückwärtsrichtung
- 10: Schulterbereich
- 11: Lendenwirbelbereich
- 12, 13: Drehbewegung der Stangenelemente
- 12a, 13a: Achsen

- 14: Auflageelement
- 15: Querstrebe
- 16, 17: erste Verbindungselemente
- 18, 19: erste Stangenstücke
- 20, 21: erste Basiselemente
- 22, 23: erste Verbindungsstellen der ersten Verbindungselemente
- 24, 25: Bohrungen der ersten Verbindungselemente
- 26, 27: zweite Basiselemente
- 28, 29: zweite Stangenstück
- 30, 31: Anschlagelemente
- 32, 33: Bohrungen der zweiten Basiselemente
- 34, 35: zweite Verbindungselemente
- 36: Verbindungsstellen der zweiten Verbindungselemente

## Patentansprüche

1. Fahrzeugsitz mit Rückenlehne (1) und Sitzteil (2), wobei die Rückenlehne (1) einen Rückenlehnenrahmen (3) und dazwischen angeordnete S-förmige Stangenelemente (6, 7) zur Bildung einer S-förmigen Rückenlehne mit einem in Vorwärts- und Rückwärtsrichtung (9) verformbaren Schulterbereich (10) und einem in Vorwärts- und Rückwärtsrichtung (9) verformbaren Lendenwirbelbereich (11) umfasst, wobei die sich in Rückenlehnenlängsrichtung (8) erstreckenden Stangenelemente (6, 7) mit ihren unteren und oberen Enden (6a, 6b; 7a, 7b) am Rückenlehnenrahmen (3) derart schwenkbar gelagert sind, dass sie um eine sich in Längsrichtung (8) der Rückenlehne (1) erstreckende imaginäre Achse (12a, 13a) schwenkbar sind,
**dadurch gekennzeichnet, dass**
die Stangenelemente (6,7) in Längsrichtung (8) der Rückenlehne (1) verschiebbar am Rückenlehnenrahmen (3) gelagert sind.

2. Fahrzeugsitz nach Anspruch 1,
**dadurch gekennzeichnet, dass**
jedes Stangenelement (6, 7) an seinem unteren und oberen Ende (6a, 7a; 6b, 7b) mittels erster und zweiter Verbindungselemente (16, 17; 34, 35), welche am Rückenlehnenrahmen (3) mittels Schwenklager (18, 20; 19, 21; 26, 28; 27, 29) schwenkbar gelagert sind, mit dem Rückenlehnenrahmen (3) verbunden ist.

3. Fahrzeugsitz nach Anspruch 2,
**dadurch gekennzeichnet, dass**
das untere und obere Ende (6a, 7a; 6b, 7b) von jedem Stangenelement (6, 7) im Endbereich des Verbindungselements (16, 17, 34, 35) mittels Verbindungsstellen (22. 23; 36) angeordnet sind.

4. Fahrzeugsitz nach Anspruch 2 oder 3,
**dadurch gekennzeichnet, dass**
das erste Schwenklager (18, 20; 19, 21) des ersten Verbindungselements (16,17), welches dem oberen Ende (6b, 7b) jedes Stangenelementes (6, 7) zugeordnet ist, ein am Rückenlehnenrahmen (3, 15) befestigtes erstes Stangenstück (18, 19), welches in seiner Längsrichtung gegenüber dem Rückenlehnenrahmen (3, 15) verschiebbar ist und das erste Verbindungselement (16, 17) in einer Bohrung (24, 25) durchläuft, umfasst.

5. Fahrzeugsitz nach einem der Ansprüche 2-4,
**dadurch gekennzeichnet, dass**
das zweite Schwenklager (26, 28; 27, 29) des zweiten Verbindungselements (34, 35), welches das untere Ende (6a, 7a) jedes Stangenelements (6, 7) zugeordnet ist, ein am Rückenlehnenrahmen (3) befestigtes zweites Stangenstück (28, 29), welches in seiner Längsrichtung gegenüber dem Rückenlehnenrahmen (3) verschiebbar ist und mit dem zweiten Verbindungselement (34, 35) endseitig verbunden ist, umfasst.

6. Fahrzeugsitz nach Anspruch 5,
**dadurch gekennzeichnet, dass**
das zweite Stangenstück (28, 29) unterseitig ein Anschlagselement (30, 31) zur Begrenzung einer Schiebebewegung des zweiten Stangenstücks (28, 29) aufweist.

7. Fahrzeugsitz nach einem der Ansprüche 6,
**gekennzeichnet durch,**
ein an einem oder mehreren der Stangenstücke (18, 19; 28, 29) angebrachtes Betätigungselement zur Durchführung einer Schiebebewegung mindestens einer der Stangenstücke (18, 19; 28, 29).

8. Fahrzeugsitz nach einem der vorangegangenen Ansprüche,
**dadurch gekennzeichnet, dass**
die Stangenelemente (6, 7) zweiteilig aufgebaut sind, wobei ein erster oberer Stangenelementteil unabhängig von einem zweiten unteren Stangenelementteil schwenkbar ist.

9. Fahrzeugsitz nach einem der vorangegangenen Ansprüche,
**dadurch gekennzeichnet, dass**
die S-förmigen Stangenelemente (6, 7) getrennt in Längsrichtung (8) der Rückenlehne (1) verschiebbar sind.

## Claims

1. Vehicle seat with a backrest (1) and a seat part (2), wherein the backrest (1) comprises a backrest frame (3) and S-shaped rod elements (6, 7) arranged therebetween so as to form an S-shaped backrest having a shoulder region (10) which can be deformed in the forward and backward direction (9) and a lumbar spine region (11) which can be deformed in the forward and backward direction (9), wherein the rod elements (6, 7), which extend in the longitudinal direction (8) of the backrest, are pivotably mounted by their lower and upper ends (6a, 6b; 7a, 7b) on the backrest frame (3) in such a way that they can be pivoted about an imaginary axis (12a, 13a) which extends in the longitudinal direction (8) of the backrest (1), **characterised in that** the rod elements (6, 7) are mounted on the backrest frame (3) in such a way that they can be displaced in the longitudinal direction (8) of the backrest (1).

2. Vehicle seat according to claim 1, **characterised in that** each rod element (6, 7) is connected at its lower and upper end (6a, 7a; 6b, 7b) to the backrest frame (3) by means of first and second connecting elements (16, 17; 34, 35) which are pivotably mounted on the backrest frame (3) by means of pivot bearings (18, 20; 19, 21; 26, 28; 27, 29).

3. Vehicle seat according to claim 2, **characterised in that** the lower and upper end (6a, 7a; 6b, 7b) of each rod element (6, 7) are arranged in the end region of the connecting element (16, 17, 34, 35) by means of connection points (22, 23; 36).

4. Vehicle seat according to claim 2 or 3, **characterised in that** the first pivot bearing (18, 20; 19, 21) of the first connecting element (16, 17), which is assigned to the upper end (6b, 7b) of each rod element (6, 7), comprises a first rod piece (18, 19) which is fixed to the backrest frame (3, 15), which first rod piece can be displaced in its longitudinal direction relative to the backrest frame (3, 15) and runs through the first connecting element (16, 17) in a bore (24, 25).

5. Vehicle seat according to one of claims 2 to 4, **characterised in that** the second pivot bearing (26, 28; 27, 29) of the second connecting element (34, 35), which is assigned to the lower end (6a, 7a) of each rod element (6, 7), comprises a second rod piece (28, 29) which is fixed to the backrest frame (3), which second rod piece can be displaced in its longitudinal direction relative to the backrest frame (3) and is connected at the end to the second connecting element (34, 35).

6. Vehicle seat according to claim 5, **characterised in that** the second rod piece (28, 29) has at its lower end a stop element (30, 31) for limiting a sliding movement of the second rod piece (28, 29).

7. Vehicle seat according to one of claims 6, **characterised by** an actuating element which is fitted on one or more of the rod pieces (18, 19; 28, 29) for carrying out a sliding movement of at least one of the rod pieces (18, 19; 28, 29).

8. Vehicle seat according to one of the preceding claims, **characterised in that** the rod elements (6, 7) are formed as two parts, wherein a first, upper rod element part can be pivoted independently of a second, lower rod element part.

9. Vehicle seat according to one of the preceding claims, **characterised in that** the S-shaped rod elements (6, 7) can be displaced separately in the longitudinal direction (8) of the backrest (1).

## Revendications

1. Siège de véhicule avec un dossier (1) et une assise (2), dans lequel le dossier (1) comprend un châssis de dossier (3) et des éléments de tige (6, 7) en forme de S placés entre celui-ci pour former un dossier en forme de S avec une zone pour les épaules (10) déformable selon une direction avant et arrière (9) et une zone pour les lombaires (11) déformable selon la direction avant et arrière (9), moyennant quoi les éléments de tige (6, 7) s'étendant sur la longueur du dossier (8) sont placés, avec leurs extrémités inférieures et supérieures (6a, 6b, 7a, 7b), de manière pivotante sur le châssis du dossier (3) de telle sorte qu'ils peuvent pivoter autour d'un axe imaginaire (12a, 13a) s'étendant sur la longueur (8) du dossier (1) **caractérisé en ce que** les éléments de tige (6, 7) sont positionnés de manière à pouvoir être décalés sur le châssis de dossier (3) dans la longueur (8) du dossier (1).

2. Siège de véhicule selon la revendication 1 **caractérisé en ce que** chaque élément de tige (6, 7) est relié au châssis de dossier (3) à ses extrémités inférieures et supérieures (6a, 6b, 7a, 7b) via des premier et deuxième éléments de liaison (16, 17, 34, 35) placés de manière à pouvoir pivoter sur le châssis de dossier (3) à l'aide d'un support pivotant (18, 20, 19, 21, 26, 28, 27, 29).

3. Siège de véhicule selon la revendication 2 **caractérisé en ce que** les extrémités inférieures et supérieures (6a, 6b, 7a, 7b) de chaque élément de tige (6, 7) sont placées dans la zone d'extrémité des éléments de liaison (16, 17, 34, 35) à l'aide des jonctions (22, 23, 36).

4. Siège de véhicule selon la revendication 2 ou 3 **caractérisé en ce** le premier support pivotant (18, 20 ; 19, 21) du premier élément de liaison (16, 17) affecté à l'extrémité supérieure (6b, 7b) de chaque élément de tige (6, 7) comprend une première pièce de tige (18, 19) fixée sur le châssis de dossier (3, 15) qui peut être décalée sur sa longueur par rapport au châssis de dossier (3, 15) et traverse le premier élément de liaison (16, 17) via un trou (24, 25).

5. Siège de véhicule selon la revendication 2 à 4 **caractérisé en ce que** le deuxième support pivotant (26, 28, 27, 29) du deuxième élément de liaison (34, 35) affecté à l'extrémité inférieure (6a, 7a) de chaque élément de tige (6, 7) comprend une première pièce de tige (28, 29) fixée sur le châssis de dossier (3) qui peut être décalée sur sa longueur par rapport au châssis de dossier (3) et est reliée du côté de l'extrémité au deuxième élément de liaison (34, 35).

6. Siège de véhicule selon la revendication 5 **caractérisé en ce que** la deuxième pièce de tige (28, 29) présente dans sa partie inférieure un élément d'arrêt (30, 31) permettant de limiter un mouvement de décalage de la deuxième pièce de tige (28, 29).

7. Siège de véhicule selon la revendication 6 **caractérisé en ce qu'**un élément d'actionnement monté sur une ou plusieurs pièces de tige (18, 19, 28, 29) permet d'effectuer un mouvement de décalage au moins de l'une des pièces de tige (18, 19, 28, 29).

8. Siège de véhicule selon l'une quelconques des revendications précédentes **caractérisé en ce que** les éléments de tige (6, 7) sont montés en deux parties, moyennant quoi une première partie d'élément de tige supérieure peut pivoter indépendamment d'une deuxième partie d'élément de tige inférieure.

9. Siège de véhicule selon l'une quelconques des revendications précédentes **caractérisé en ce que** les éléments de tige (6, 7) en forme de S peuvent se décaler de manière séparée sur la longueur (8) du dossier (1).
